(19) Europäisches Patentamt
European Patent Office
Office européen des brevets

(11) **EP 3 997 423 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **21706567.1**

(22) Anmeldetag: **18.02.2021**

(51) Internationale Patentklassifikation (IPC):
**G01F 1/667** (2022.01)   **G01F 1/66** (2022.01)
**G05D 11/13** (2006.01)

(52) Gemeinsame Patentklassifikation (CPC):
**G05D 11/139; G01F 1/667**

(86) Internationale Anmeldenummer:
**PCT/EP2021/054025**

(87) Internationale Veröffentlichungsnummer:
**WO 2021/165396 (26.08.2021 Gazette 2021/34)**

(54) **BESTIMMEN EINES MISCHUNGSVERHÄLTNISSES ZWEIER FLÜSSIGKEITEN AN EINEM 3-WEGE-MISCHVENTIL**

DETERMINING A MIXING RATIO OF TWO LIQUIDS AT A 3-WAY MIXING VALVE

DÉTERMINATION D'UN RAPPORT DE MÉLANGE DE DEUX LIQUIDES AU NIVEAU D'UNE VANNE DE MÉLANGE À TROIS VOIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2020 DE 102020104191**

(43) Veröffentlichungstag der Anmeldung:
**18.05.2022 Patentblatt 2022/20**

(73) Patentinhaber: **Samson Aktiengesellschaft
60314 Frankfurt am Main (DE)**

(72) Erfinder:
• **WAGNER-STÜRZ, David
64367 Mühltal (DE)**
• **BHANGU, Kavreet
83053 Bruckmühl (DE)**
• **BOER, Adriaan Hendrik
3363 CN Sliedrecht (NL)**

(74) Vertreter: **Köllner & Partner mbB
Vogelweidstraße 8
60596 Frankfurt am Main (DE)**

(56) Entgegenhaltungen:
**US-A1- 2004 125 688    US-A1- 2006 285 429**

EP 3 997 423 B1

**Beschreibung**

Gebiet der Erfindung

Die Erfindung betrifft ein Verfahren zum Bestimmen eines Mischungsverhältnisses zweier Flüssigkeiten an einem 3-Wege-Mischventil, sowie eine entsprechende Vorrichtung.

An Mischventilen ist grundsätzlich immer von Interesse, das Mischungsverhältnis und damit die Zusammensetzung der gemischten Flüssigkeit zu ermitteln.

Stand der Technik

Das Mischungsverhältnis bei Mischventilen wird oft über Durchflussmessungen bestimmt. Diese sind allerdings in vielen Fällen ungenau oder funktionieren nur unter gewissen Voraussetzungen, die nicht immer erfüllt sein müssen, z.B. das Vorhandensein von Wirbeln.

Vortex-Durchflussmesser, auch Wirbelfrequenz-Durchflussmesser genannt, gehören heute zu den Standard-Messgeräten für die Ermittlung des Volumen-Durchflusses bzw. Volumenstroms von Fluiden, insbesondere bei höherer Fließgeschwindigkeit. Diese sind seit etwa 1970 in industriell einsetzbarer Form verfügbar. Diese Art von Durchflussmessern hat allerdings einen hohen Platzbedarf und ist empfindlich gegen Stöße und insbesondere Vibrationen. Wirbelfrequenz-Durchflussmesser sind z.B. in EP 327 103 A2, DE 10 2013 102 327 B3, EP 809 880 B1 oder EP 262 436 A1 dargestellt.

Als Alternative ist ebenfalls bekannt, Ultraschall-Sensoren zur Durchflussmessung zu verwenden (siehe z.B. https://de.wikipedia.org/wiki/Ultraschall-Durchflussmesser). Die Verwendung solcher Ultraschall-Durchflussmesser bei einem Fluidmischer wird in der Veröffentlichung US 2006/0285429 A1 beschrieben, wobei auch andere Arten von Durchflussmessern als Alternativen vorgesehen sind.

Aus der Veröffentlichung US 2004/0125688 A1 ist ein geschlossenes automatisches Fluidmischsystem bekannt, welches ein 3-Wege-Mischventil beinhaltet. Dieses hat zwei Zuläufe für verschiedene Flüssigkeiten und einen Ablauf für eine gemischte Flüssigkeit. Das System hat an jedem Zulauf und am Ablauf des Mischventils jeweils einen magnetischen Durchflussmesser, sowie einen elektronischen Controller.

Aufgabe

Aufgabe der Erfindung ist es, ein Verfahren und eine Vorrichtung anzugeben, welche das Mischungsverhältnis zweier Flüssigkeiten an einem 3-Wege-Mischventil besser und genauer bestimmen können.

Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Bestimmen eines Mischungsverhältnisses zweier Flüssigkeiten an einem 3-Wege-Mischventil vorgeschlagen, welches die folgenden Schritte umfasst: Die Transmission eines Ultraschallsignals durch die erste Flüssigkeit in einem ersten Zulauf des Mischventils wird gemessen. Auch die Transmission eines Ultraschallsignals durch die zweite Flüssigkeit in einem zweiten Zulauf des Mischventils wird gemessen. Zudem wird die Transmission eines Ultraschallsignals durch die gemischte Flüssigkeit im Ablauf des Mischventils gemessen. Schließlich wird aus den gemessenen Transmissionen das Mischungsverhältnis berechnet.

Auf diese Weise lässt sich, unter der Voraussetzung, dass die erste und die zweite Flüssigkeit unterschiedliche Transmissionen für Ultraschallsignale haben, präzise die Zusammensetzung der gemischten Flüssigkeit ermitteln. Das Verfahren ist unempfindlich gegen Vibrationen, und es sind keine Annahmen über Strömungsverhältnisse o.ä. notwendig.

Bei einer bevorzugten Weiterbildung wird der zeitliche Verlauf des Mischungsverhältnisses erfasst. Veränderungen des Mischungsverhältnisses werden gespeichert und/oder als Meldung ausgegeben.

Unerwünschte Veränderungen am Prozess lassen sich unterdrücken, wenn die Stellung des Mischventils angepasst wird, wenn eine Veränderung des Mischungsverhältnisses eintritt, wobei die Anpassung der Stellung des Mischventils derart erfolgt, dass die Veränderung des Mischungsverhältnisses rückgängig gemacht wird. Auf diese Weise wird sichergestellt, dass sich das Mischungsverhältnis auf Dauer nicht verändert.

Ein sicheres Funktionieren des Verfahrens bei gleichzeitig möglichst geringem Energieverbrauch wird erreicht, wenn in jedem Zulauf und im Ablauf des Mischventils jeweils mindestens ein Ultraschall-Sender und/oder -Empfänger angeordnet ist, und wenn die Leistung aller Ultraschall-Sender erhöht wird, wenn das Signal an mindestens einem der Ultraschall-Empfänger zu schwach ist. So kann sichergestellt werden, dass jederzeit ein gut auswertbares Signal vorliegt, ohne die Ultraschall-Sender jederzeit mit maximaler Sendeleistung betreiben zu müssen.

Mehr Information über den Zustand des Mischventils gewinnt man, wenn in jedem Zulauf und im Ablauf des Mischventils jeweils mindestens ein Ultraschall-Sender und/oder-Empfänger angeordnet ist, und wenn die Ultraschall-Sender und/oder -Empfänger zum Bestimmen des Durchflusses der ersten Flüssigkeit durch den ersten Zulauf und/oder der zweiten Flüssigkeit durch den zweiten Zulauf und/oder der gemischten Flüssigkeit durch den Ablauf des Mischventils genutzt werden. Dann liegen zusätzlich zum Mischungsverhältnis Durchfluss-Daten vor. Mit diesen lässt sich ein zweites Mischungsverhältnis berechnen. Wenn das aus den Transmissionen berechnete Mischungsverhältnis mit dem aus den Durchflüssen berechneten zweiten Mischungsverhältnis verglichen wird, kann die Genauigkeit des Ergebnisses weiter erhöht werden.

Die Aufgabe wird ferner gelöst durch eine Vorrichtung mit einem 3-Wege-Mischventil zum Mischen zweier Flüssigkeitsströme, einem ersten Zulauf zum Mischventil und einem zweiten Zulauf zum Mischventil, wobei eine erste Flüssigkeit durch den ersten Zulauf und eine zweite Flüssigkeit durch den zweiten Zulauf zum Mischventil strömen kann, und mit einem Ablauf, durch den eine gemischte Flüssigkeit vom Mischventil ablaufen kann. Die Vorrichtung hat außerdem eine erste Einrichtung zum Messen der Transmission eines Ultraschallsignals im ersten Zulauf zum Mischventil, eine zweite Einrichtung zum Messen der Transmission eines Ultraschallsignals im zweiten Zulauf zum Mischventil und eine dritte Einrichtung zum Messen der Transmission eines Ultraschallsignals im Ablauf vom Mischventil. Ferner sind Mittel zum Berechnen des Mischungsverhältnisses der Flüssigkeiten aus den gemessenen Transmissionen vorhanden.

Diese Vorrichtung ermöglicht es, bei einem 3-Wege-Mischventil das Mischungsverhältnis jederzeit präzise anzugeben. Als Voraussetzung dient lediglich, dass die Ultraschall-Transmissionen durch die erste und die zweite Flüssigkeit unterschiedlich sein müssen.

Vorzugsweise ist als Einrichtung zur Messung der Transmission eines Ultraschallsignals ein Ultraschall-Sender mit einem durch die Flüssigkeit betrachtet gegenüber angeordneten Ultraschall-Empfänger vorgesehen. Zusätzlich oder alternativ dazu kann ein Ultraschall-Sensor, der sowohl zum Senden als auch zum Empfangen geeignet ist, mit mindestens einem durch die Flüssigkeit betrachtet gegenüber angeordneten Ultraschall-Reflektor, vorgesehen sein.

Besonders bevorzugt wird, dass die Vorrichtung eine Steuerung zur Durchführung eines Verfahrens, wie es weiter oben beschrieben wurde, aufweist. Damit lässt sich das weiter oben beschriebene Verfahren auf der Vorrichtung durchführen. Somit werden sämtliche Vorteile dieses Verfahrens erzielt.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Ein Ausführungsbeispiel ist in der Figur schematisch dargestellt. Im Einzelnen zeigt:

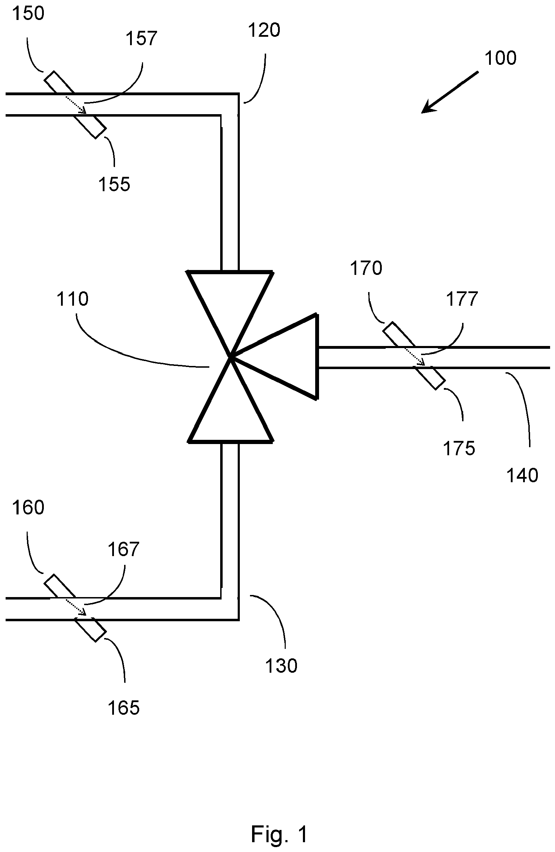

Fig. 1     eine schematische Darstellung einer erfindungsgemäßen Vorrichtung.

Fig. 1 zeigt eine Vorrichtung 100 mit einem 3-Wege-Mischventil 110. Dieses hat als Anschlüsse einen ersten Zulauf 120, durch den eine erste Flüssigkeit zum Mischventil strömen kann, einen zweiten Zulauf 130, durch den eine zweite Flüssigkeit zum Mischventil strömen kann, und einen Ablauf 140, durch den eine gemischte Flüssigkeit vom Mischventil weg strömen kann.

Am ersten Zulauf sind vorzugsweise ein erster Ultraschall-Sender 150 und, durch die Flüssigkeit betrachtet gegenüber, ein erster Ultraschall-Empfänger 155 angeordnet. Entsprechend sind am zweiten Zulauf vorzugsweise ein zweiter Ultraschall-Sender 160 und, durch die Flüssigkeit betrachtet gegenüber, ein zweiter Ultraschall-Empfänger 165 angeordnet. Gleiches gilt für den Ablauf: Dort ist vorzugsweise ein dritter Ultraschall-Sender 170 und, durch die Flüssigkeit betrachtet gegenüber, ein dritter Ultraschall-Empfänger 175 angeordnet. Die Signalrichtung vom jeweiligen Sender zum Empfänger muss dabei nicht senkrecht zur Fließrichtung der Flüssigkeit sein - in Fig. 1 sind die Ultraschallsender 150, 160, 170 und -Empfänger 155, 165, 175 beispielsweise so angeordnet, dass das jeweilige Ultraschallsignal 157, 167, 177 in einem deutlich von 90° abweichenden Winkel durch die Flüssigkeit läuft. Solche Anordnungen sind z.B. für das Messen des Durchflusses mittels Ultraschall bekannt (siehe z.B. https://de.wikipedia.org/wiki/Ultraschall-Durchflussmesser).

Es sind auch alternative Gestaltungsmöglichkeiten denkbar, bei denen jeweils ein Ultraschall-Sensor, der sowohl als Sender als auch als Empfänger arbeiten kann und, durch die Flüssigkeit betrachtet gegenüber, eine Ultraschall-Reflexionsfläche zum Einsatz kommen (nicht dargestellt).

Die Ultraschall-Sender können Ultraschall-Signale 157, 167, 177 durch die jeweilige Flüssigkeit hindurch zum jeweils gegenüberliegenden Empfänger senden, wobei aus der empfangenen Signalstärke die Transmission bestimmt werden kann.

Ein Auswertesystem, beispielsweise ein Steuermodul, Computer o.ä. (nicht dargestellt) kann aus den Signalstärken bzw. Transmissionen das Mischungsverhältnis und damit die Zusammensetzung der gemischten Flüssigkeit bestimmen. Einzige Voraussetzung ist, dass die Ultraschall-Transmissionen der ersten und der zweiten Flüssigkeit nicht gleich sind.

Die Berechnung des Mischungsverhältnisses beruht auf den im Folgenden dargestellten Zusammenhängen:

Absorption und Streuung von Ultraschallsignalen in einem Medium in einem Rohr folgen einer Exponentialfunktion. Somit gilt für die Transmission:

$$T = \exp[\, -x\, (\, \sigma_a c_a + \sigma_s c_s \,) \,]$$

Dabei ist

$T$ die Transmission,
$x$ der Durchmesser der Rohrleitung,
$\sigma$ der Wirkungsquerschnitt und
$c$ die Konzentration, jeweils für die Teilchen, die die Signale absorbieren (gekennzeichnet durch den Index a) bzw. streuen (gekennzeichnet durch den Index s).

Kann man die Effekte Streuung s und Absorption a nicht auseinanderhalten, gilt:

$$T = \exp[\, -x\, \sigma\, c \,]$$

wobei

$\sigma$ der Wirkungsquerschnitt für den kombinierten Effekt aus Streuung und Absorption
$c$ die Konzentration der streuenden und/oder absorbierenden Teilchen darstellt.

Die Transmissionen für ein Ultraschallsignal im ersten (gekennzeichnet durch den Index 1) und zweiten Zulauf (gekennzeichnet durch den Index 2) zum Mischventil sind also gegeben durch:

$$T_1 = \exp[\, -x\, \sigma_1 c_1 \,]$$

und

$$T_2 = \exp[\, -x\, \sigma_2 c_2 \,]$$

unter der Annahme, dass beide Rohre den gleichen Durchmesser x haben. Hinter dem Mischventil (gekennzeichnet durch den Index h) gilt mit den Mischanteilen $A_1$ und $A_2$, wobei

$$A_1 + A_2 = 1$$

ist:

$$T_h = \exp[\, -x\,(\,\sigma_1 c_1 A_1 + \sigma_2 c_2 A_2\,)\,]$$

$$= \exp[\, -x\,(\,\sigma_1 c_1 A_1\,)\,] * \exp[\, -x\,(\,\sigma_2 c_2 A_2\,)\,]$$

$$= \exp[\, -x\,\sigma_1 c_1\,]\,\char`\^\,A_1 * \exp[\, -x\,(\,\sigma_2 c_2\,)\,]\,\char`\^\,A_2$$

$$= T_1\char`\^ A_1 * T_2\char`\^ A_2$$

wobei der Durchmesser des Ablaufs unverändert mit x angenommen wird. Durch Einsetzen von

$$A_2 = 1 - A_1$$

erhält man

$$T_h = T_1\char`\^ A_1 * T_2\char`\^(1 - A_1)$$

$$= (T_1 / T_2)\char`\^ A_1 * T_2$$

Damit ist

$$T_h / T_2 = (\,T_1 / T_2\,)\char`\^ A_1$$

Bildet man den Logarithmus, ergibt sich:

$$\ln(\,T_h / T_2\,) = \ln(\,(\,T_1 / T_2\,)\char`\^ A_1) = A_1 * \ln(\,T_1 / T_2\,)$$

Für den Mischanteil $A_1$ und damit die Zusammensetzung der gemischten Flüssigkeit im Ablauf vom Mischventil gilt:

$$A_1 = \ln(\,T_h / T_2\,) / \ln(\,T_1 / T_2\,) = (\,\ln T_h - \ln T_2\,) / (\,\ln T_1 - \ln T_2\,)$$

Haben die Rohrleitungen dagegen unterschiedliche Durchmesser $x_1$, $x_2$, $x_h$, so gilt entsprechend Folgendes:

$$A_1 = (\,\ln T_h - x_h / x_1 \ln T_2\,) / (\,x_h / x_1 \ln T_1 - x_h / x_2 \ln T_2\,)$$

Damit sind beide Mischanteile bekannt, da $A_2 = 1 - A_1$ ist. Die Zusammensetzung der gemischten Flüssigkeit lässt sich also präzise angeben.

Glossar

Durchfluss

Dies bezeichnet einen Volumenstrom durch ein Anlagen- bzw. Prozesselement. Dieser wird z.B. von einem Durchflussmesser gemessen. Allgemein gilt für den Volumenstrom $Q = dV/dt$. Sind Querschnittsfläche A des durchströmten Elements und mittlere Fließgeschwindigkeit $v_m$ bekannt, gilt $Q = v_m * A$.

Mischventil

Ein Mischventil beeinflusst das Verhältnis von mindestens zwei Volumenströmen. Es ist eine Variante eines Stellventiles mit mindestens zwei Eingängen und mindestens einem Ausgang. Typischerweise ist ein Drehschieber eingebaut, der auch Küken genannt wird. Die Stellung des Mischer-Kükens kann manuell oder auch über einen Antrieb erfolgen. Dieser kann z.B. elektrisch oder pneumatisch sein ("Mischermotor"). Wenn nicht ausdrücklich etwas anderes gefordert wird, ist bei dieser Erfindung immer ein Mischventil mit zwei Eingängen und einem Ausgang gemeint, also ein 3-Wege-Mischventil.

Bezugszeichen

| | |
|---|---|
| 100 | Vorrichtung |
| 110 | 3-Wege-Mischventil |
| 120 | erster Zulauf |
| 130 | zweiter Zulauf |
| 140 | Ablauf |
| 150 | erster Ultraschall-Sender |
| 155 | erster Ultraschall-Empfänger |
| 157 | erstes Ultraschall-Signal |
| 160 | zweiter Ultraschall-Sender |
| 165 | zweiter Ultraschall-Empfänger |
| 167 | zweites Ultraschall-Signal |
| 170 | dritter Ultraschall-Sender |
| 175 | dritter Ultraschall-Empfänger |
| 177 | drittes Ultraschall-Signal |

zitierte Literatur

zitierte Patentliteratur

EP 327 103 A2
DE 10 2013 102 327 B3
EP 809 880 B1
EP 262 436 A1
US 2004/0125688 A1
US 2006/0285429 A1

zitierte Nicht-Patentliteratur
https://de.wikipedia.org/wiki/Ultraschall-Durchflussmesser, abgerufen am 21.01.2020

**Patentansprüche**

1. Verfahren zum Bestimmen eines Mischungsverhältnisses zweier Flüssigkeiten an einem 3-Wege-Mischventil (110), **gekennzeichnet durch** die folgenden Schritte:

 1.1 Messen der Transmission eines Ultraschallsignals (157) durch die erste Flüssigkeit in einem ersten Zulauf (120) des Mischventils;
 1.2 Messen der Transmission eines Ultraschallsignals (167) durch die zweite Flüssigkeit in einem zweiten Zulauf (130) des Mischventils;
 1.3 Messen der Transmission eines Ultraschallsignals (177) durch die gemischte Flüssigkeit im Ablauf (140) des Mischventils;
 1.4 Berechnen des Mischungsverhältnisses aus den gemessenen Transmissionen.

**2.** Verfahren nach dem vorhergehenden Anspruch,

**dadurch gekennzeichnet,**
**dass** der zeitliche Verlauf des Mischungsverhältnisses erfasst wird; und
**dass** Veränderungen des Mischungsverhältnisses gespeichert und/oder als Meldung ausgegeben werden.

**3.** Verfahren nach einem der vorhergehenden Ansprüche,

**dadurch gekennzeichnet,**
**dass** die Stellung des Mischventils (110) angepasst wird, wenn eine Veränderung des Mischungsverhältnisses eintritt;
wobei die Anpassung der Stellung des Mischventils (110) derart erfolgt, dass die Veränderung des Mischungsverhältnisses rückgängig gemacht wird.

**4.** Verfahren nach einem der vorhergehenden Ansprüche,

4.1 wobei in jedem Zulauf (120, 130) und im Ablauf (140) des Mischventils jeweils mindestens ein Ultraschall-Sender (150, 160, 170) und/oder -Empfänger (155, 165, 175) angeordnet ist,
**dadurch gekennzeichnet,**
4.2 dass die Leistung aller Ultraschall-Sender erhöht wird, wenn das Signal an mindestens einem der Ultraschall-Empfänger zu schwach ist.

**5.** Verfahren nach einem der vorhergehenden Ansprüche,

5.1 wobei in jedem Zulauf und im Ablauf des Mischventils jeweils mindestens ein Ultraschall-Sender und/oder -Empfänger angeordnet ist,
**dadurch gekennzeichnet,**
5.2 dass die Ultraschall-Sender und/oder -Empfänger zum Bestimmen des Durchflusses der ersten Flüssigkeit durch den ersten Zulauf und/oder der zweiten Flüssigkeit durch den zweiten Zulauf und/oder der gemischten Flüssigkeit durch den Ablauf des Mischventils genutzt werden.

**6.** Verfahren nach dem unmittelbar vorhergehenden Anspruch,
**dadurch gekennzeichnet,**

6.1 dass aus den bestimmten Durchflüssen ein zweites Mischungsverhältnis bestimmt wird; und
6.2 dass das aus den Transmissionen berechnete Mischungsverhältnis mit dem aus den Durchflüssen berechneten zweiten Mischungsverhältnis verglichen wird.

**7.** Vorrichtung (100) mit

7.1 einem 3-Wege-Mischventil (110) zum Mischen zweier Flüssigkeitsströme;
7.2.1 einem ersten Zulauf (120) zum Mischventil; und
7.2.2 einem zweiten Zulauf (130) zum Mischventil;
7.2.3 wobei eine erste Flüssigkeit durch den ersten Zulauf und eine zweite Flüssigkeit durch den zweiten Zulauf zum Mischventil strömen kann; und mit
7.3 einem Ablauf (140), durch den eine gemischte Flüssigkeit vom Mischventil ablaufen kann; **gekennzeichnet durch**
7.4.1 eine erste Einrichtung (150, 155) zum Messen der Transmission eines Ultraschallsignals im ersten Zulauf zum Mischventil;
7.4.2 eine zweite Einrichtung (160, 165) zum Messen der Transmission eines Ultraschallsignals im zweiten Zulauf zum Mischventil;
7.4.3 eine dritte Einrichtung (170, 175) zum Messen der Transmission eines Ultraschallsignals im Ablauf vom Mischventil; und durch
7.5 Mittel zum Berechnen des Mischungsverhältnisses der Flüssigkeiten aus den gemessenen Transmissionen.

**8.** Vorrichtung nach dem vorhergehenden Anspruch,
**dadurch gekennzeichnet,**

8.1 dass als Einrichtung zur Messung der Transmission eines Ultraschallsignals ein Ultraschall-Sender (150, 160, 170) mit einem durch die Flüssigkeit betrachtet gegenüber angeordneten Ultraschall-Empfänger (155, 165, 175)

und/oder

8.2 ein Ultraschall-Sensor, der sowohl zum Senden als auch zum Empfangen geeignet ist, mit mindestens einem durch die Flüssigkeit betrachtet gegenüber angeordneten Ultraschall-Reflektor

vorgesehen ist.

9. Vorrichtung nach Anspruch 7 oder 8,
   **gekennzeichnet durch**
   eine Steuerung zum Ausführen des Verfahrens nach einem der Verfahrensansprüche.


**Claims**

1. Method of determining a mixing ratio of two liquids at a 3-way mixing valve (110), **characterised by** the following steps:

   1.1 measuring the transmission of an ultrasonic signal (157) through the first liquid in a first inlet (120) of the mixing valve;
   1.2 measuring the transmission of an ultrasonic signal (167) through the second liquid in a second inlet (130) of the mixing valve;
   1.3 measuring the transmission of an ultrasonic signal (177) through the mixed liquid in the outlet (140) of the mixing valve;
   1.4 calculating the mixing ratio from the measured transmissions.

2. Method according to the preceding claim,

   **characterised in that**
   the chronological sequence of the mixing ratio is recorded; and
   changes in the mixing ratio are stored and/or output as a message.

3. Method according to any one of the preceding claims,
   **characterised in that**
   the position of the mixing valve (110) is adjusted when a change in the mixing ratio occurs; wherein the adjustment of the position of the mixing valve (110) is such that the change in the mixing ratio is reversed.

4. Method according to any one of the preceding claims,

   4.1 wherein at least one ultrasonic transmitter (150, 160, 170) and/or receiver (155, 165, 175) is arranged in each inlet (120, 130) and in the outlet (140) of the mixing valve,
   **characterised in that**
   4.2 the power of all ultrasonic transmitters is increased if the signal at at least one of the ultrasonic receivers is too weak.

5. Method according to any one of the preceding claims,

   5.1 wherein at least one ultrasonic transmitter and/or receiver is arranged in each inlet and in the outlet of the mixing valve,
   **characterised in that**
   5.2 the ultrasonic transmitters and/or receivers are used to determine the flow of the first liquid through the first inlet and/or of the second liquid through the second inlet and/or of the mixed liquid through the outlet of the mixing valve.

6. Method according to the immediately preceding claim,
   **characterised in that**

   6.1 a second mixing ratio is determined from the determined flow rates; and

6.2 the mixing ratio calculated from the transmissions is compared with the second mixing ratio calculated from the flow rates.

**7.** Device (100) with

7.1 a 3-way mixing valve (110) for mixing two liquid streams;
7.2.1 a first inlet (120) to the mixing valve; and
7.2.2 a second inlet (130) to the mixing valve;
7.2.3 a first liquid being able to flow through the first inlet and a second liquid being able to flow through the second inlet to the mixing valve; and with
7.3 an outlet (140) through which a mixed liquid can drain from the mixing valve;
**characterised by**
7.4.1 a first facility (150, 155) for measuring the transmission of an ultrasonic signal in the first inlet to the mixing valve;
7.4.2 a second facility (160, 165) for measuring the transmission of an ultrasonic signal in the second inlet to the mixing valve;
7.4.3 a third facility (170, 175) for measuring the transmission of an ultrasonic signal in the outlet from the mixing valve; and by
7.5 means for calculating the mixing ratio of the liquids from the measured transmissions.

**8.** Device according to the preceding claim,
**characterised in that**

8.1 as a facility for measuring the transmission of an ultrasonic signal an ultrasonic transmitter (150, 160, 170) with an ultrasonic receiver (155, 165, 175) arranged opposite as viewed through the liquid
and/or
8.2 an ultrasonic sensor, suitable for both transmitting and receiving, with at least one ultrasonic reflector arranged opposite as viewed through the liquid
is provided.

**9.** Device according to claim 7 or 8,
**characterised by**
a controller for performing the method according to one of the method claims.

**Revendications**

**1.** Procédé de détermination d'un taux de mélange de deux liquides sur une vanne de mélange à trois voies (110),
**caractérisé par** les étapes suivantes :

1.1 mesure de la transmission d'un signal ultrasonore (157) par le premier liquide dans une première amenée (120) de la vanne de mélange ;
1.2 mesure de la transmission d'un signal ultrasonore (167) à travers le second liquide dans une seconde amenée (130) de la vanne de mélange ;
1.3 mesure de la transmission d'un signal ultrasonore (177) à travers le liquide mélangé dans la sortie (140) de la vanne de mélange ;
1.4 calcul du rapport de mélange à partir des transmissions mesurées.

**2.** Procédé selon la revendication précédente,

**caractérisé**
**en ce que** l'évolution temporelle du rapport de mélange est enregistrée ; et
**en ce que** les modifications du rapport de mélange sont enregistrées et/ou émises sous forme de message.

**3.** Procédé selon l'une quelconque des revendications précédentes,

**caractérisé**
**en ce que** la position de la vanne de mélange (110) est adaptée lorsqu'une modification du rapport de mélange se produit ;
l'adaptation de la position de la vanne de mélange (110) étant effectuée de manière à annuler la modification du rapport de mélange.

4.  Procédé selon l'une quelconque des revendications précédentes,

    4.1 dans lequel au moins un émetteur (150, 160, 170) et/ou un récepteur (155, 165, 175) d'ultrasons est disposé dans chaque amenée (120, 130) et dans la sortie (140) de la vanne de mélange,
    **caractérisé**
    4.2 en ce que la puissance de tous les émetteurs d'ultrasons est augmentée lorsque le signal sur au moins un des récepteurs d'ultrasons est trop faible.

5.  Procédé selon l'une quelconque des revendications précédentes,

    5.1 dans lequel au moins un émetteur et/ou un récepteur d'ultrasons est disposé dans chaque amenée et dans la sortie de la vanne de mélange,
    **caractérisé**
    5.2 en ce que les émetteurs et/ou récepteurs d'ultrasons sont utilisés pour déterminer le flux du premier liquide à travers la première amenée et/ou du deuxième liquide à travers la deuxième amenée et/ou du liquide mélangé à travers la sortie de la vanne de mélange.

6.  Procédé selon la revendication immédiatement précédente,
    **caractérisé**

    6.1 en ce qu'un deuxième rapport de mélange est déterminé à partir des flux déterminés ; et
    6.2 en ce que le rapport de mélange calculé à partir des transmissions est comparé au deuxième rapport de mélange calculé à partir des flux.

7.  Dispositif (100) comprenant

    7.1 une vanne de mélange à trois voies (110) pour mélanger deux flux de liquide ;
    7.2.1 une première amenée (120) vers la vanne de mélange ; et
    7.2.2 une deuxième amenée (130) vers la vanne de mélange ;
    7.2.3 dans lequel un premier liquide peut s'écouler à travers la première amenée et un deuxième liquide peut s'écouler à travers la deuxième amenée vers la vanne de mélange ; et comprenant
    7.3 une sortie (140) par laquelle un liquide mélangé peut s'écouler de la vanne de mélange ; **caractérisé par**
    7.4.1 un premier dispositif (150, 155) pour mesurer la transmission d'un signal ultrasonore dans la première amenée vers la vanne de mélange ;
    7.4.2 un deuxième dispositif (160, 165) pour mesurer la transmission d'un signal ultrasonore dans la deuxième amenée vers la vanne de mélange ;
    7.4.3 un troisième dispositif (170, 175) pour mesurer la transmission d'un signal ultrasonore dans la sortie de la vanne de mélange ; et par
    7.5 des moyens pour calculer le rapport de mélange des liquides à partir des transmissions mesurées.

8.  Dispositif selon la revendication précédente,
    **caractérisé**

    8.1 en ce que le dispositif de mesure de la transmission d'un signal ultrasonore comprend un émetteur d'ultrasons (150, 160, 170) avec un récepteur d'ultrasons (155, 165, 175) disposé en face, vu à travers le liquide.
    et/ou
    8.2 un capteur à ultrasons, qui est apte à la fois à l'émission et à la réception, avec au moins un réflecteur à ultrasons disposé en face, vu à travers le liquide.

9.  Dispositif selon la revendication 7 ou 8,
    **caractérisé par**
    une commande pour l'exécution du procédé selon l'une des revendications de procédé.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 327103 A2
- DE 102013102327 B3
- EP 809880 B1
- EP 262436 A1
- US 20060285429 A1
- US 20040125688 A1